# EUROPÄISCHE PATENTANMELDUNG

(11) **EP 4 764 231 A1**
(43) Veröffentlichungstag der Anmeldung: **24.06.2026**
(21) Anmeldenummer: 24221622.4
(22) Anmeldetag: 19.12.2024
(51) Int. Cl.: F16B 7/18, F16B 37/08, F16B 7/10

(54) **ANORDNUNG**

(71) Anmelder: Geberit International AG, 8645 Jona (CH)
(72) Erfinder: ZWICKER, Maurus, 8733 Eschenbach (CH)
(74) Vertreter: Frischknecht, Harry Ralph

(57) **Zusammenfassung**

Eine Anordnung zur Bereitstellung einer Verbindung zwischen einem Profil (1) und einem weiteren Element (E), wobei die Anordnung
ein sich entlang einer Profilachse (A) ersteckendes Profil (1) mit einer Seitenwand (2), welche einen Profilinnenraum (3) seitlich begrenzt, und mit Stirnflächen (4), welche das Profil (1) jeweils endseitig begrenzen, und
mindestens ein mit dem Profil (1) verbindbares Verbindungselement (5) mit einem Verbindungsabschnitt (6) und mindestens einem Funktionsabschnitt (7), umfasst,
wobei mindestens eine der genannten Seitenwände (2) eine Vielzahl von beabstandet zueinander liegenden profilseitigen Rasterhebungen (8) aufweist, welche quer zur Profilachse (A) orientiert sind und sich in den Profilinnenraum (3) hineinerstrecken,
wobei das Verbindungselement (5) eine Vielzahl von verbindungselementseitigen Rasterhebungen (9) aufweist, und
wobei das Verbindungselement (5) in den Profilinnenraum (3) einsetzbar ist und im eingesetzten Zustand von einer Einsetzlage in eine Rastlage bewegbar ist, derart, dass die verbindungselementseitigen Rasterhebungen (9) in einen Eingriff mit den profilseitigen Rasterhebungen (8) bringbar sind, wobei der Eingriff derart ist, dass das Verbindungselement (5) im Profilinnenraum (3) bezüglich einer Bewegung in Richtung der Profilachse (A) festgelegt ist.

## Beschreibung

### TECHNISCHES GEBIET

Die vorliegende Erfindung betrifft eine Anordnung zur Bereitstellung einer Verbindung zwischen einem Profil und einem weiteren Element nach Anspruch 1.

### STAND DER TECHNIK

Aus dem Stand der Technik sind Wandsysteme für Sanitärräume bekannt geworden. Derartige Wandsysteme werden mit Profilen bereitgestellt, welche dann mit einer Beplankungswand verkleidet werden. Die Profile dienen einerseits als Stützelemente für die Beplankungswand. Andererseits sind die Profile auch dafür ausgebildet, Lagerstellen für Sanitärartikel bereitzustellen.

### DARSTELLUNG DER ERFINDUNG

Es ist eine Aufgabe der vorliegenden Erfindung, eine Anordnung anzugeben, welche ein Profil und ein Verbindungselement aufweist und welche die Verbindung des Profils mit einem weiteren Element zulässt, wobei das Verbindungselement in einfacher Art und Weise am Profil montiert werden kann.

Diese und andere Aufgaben löst der Gegenstand nach Anspruch 1. Die Anordnung nach Anspruch 1 dient der Bereitstellung einer Verbindung zwischen einem Profil und einem weiteren Element. Die Anordnung umfasst ein sich entlang einer Profilachse ersteckendes Profil mit einer Seitenwand, welche einen Profilinnenraum seitlich begrenzt, und mit Stirnflächen, welche das Profil jeweils endseitig begrenzen, und mindestens ein mit dem Profil verbindbares Verbindungselement mit einem Verbindungsabschnitt und mindestens einem Funktionsabschnitt. Mindestens eine der genannten Seitenwände weist eine Vielzahl von beabstandet zueinander liegenden profilseitigen Rasterhebungen auf, welche quer zur Profilachse orientiert sind und sich in den Profilinnenraum hineinerstrecken. Das Verbindungselement weist eine Vielzahl von verbindungselementseitigen Rasterhebungen auf. Das Verbindungselement ist in den Profilinnenraum einsetzbar. Im eingesetzten Zustand ist das Verbindungselement von einer Einsetzlage in eine Rastlage bewegbar, derart, dass die verbindungselementseitigen Rasterhebungen in einen Eingriff mit den profilseitigen Rasterhebungen bringbar sind. Der Eingriff ist derart, dass das Verbindungselement im Profilinnenraum bezüglich einer Bewegung in Richtung der Profilachse festgelegt ist.

Für die festgelegte Lagerung des Verbindungselements am Profil wird eine sehr einfach herzustellende Struktur bereitgestellt.

Das Verbindungselement ist derart zum Profilinnenraum festgelegt, dass eine Kraft in Richtung der Profilachse zwischen dem Verbindungselement und dem Profil übertragen werden kann.

Zwischen den Rasterhebungen liegen jeweils Zwischenräume. Die profilseitigen Rasterhebungen greifen dabei in Zwischenräume zwischen den verbindungselementseitigen Rasterhebungen und die verbindungselementseitigen Rasterhebungen greifen jeweils in Zwischenräume zwischen den profilseitigen Rasterhebungen.

Der Funktionsabschnitt weist eine Befestigungsstruktur zur Befestigung des weiteren Elements auf.

In einer ersten Ausführungsform weist das Verbindungselement als Funktionsabschnitt eine Gewindeöffnung zur Aufnahme einer Befestigungsschraube auf. Der Gewindeöffnung ist eine Antriebsöffnung vorgelagert, mit welcher das Verbindungselement von der Einsetzlage in die Rastlage verschwenkbar ist.

Vorzugsweise weist die Antriebsöffnung die Form eines Innensechskants, eines Schlitzes oder eines Kreuzschlitzes auf.

Vorzugsweise wird das Verbindungselement ausgehend von der Einsetzlage in die Rastlage um die Profilachse um einen Verschwenkwinkel verschwenkt. Der Verschwenkwinkel ist vorzugsweise im Bereich von 45° bis 90°, insbesondere im Bereich von 45° bis 80°.

Vorzugsweise weist die Seitenwand im Profilinnenraum mindestens eine profilseitige Anschlagsfläche auf. Das Verbindungselement weist eine verbindungselementseitige Anschlagsfläche auf. Die beiden Anschlagsflächen schlagen aneinander an, wenn das Verbindungselement in der Rastlage ist.

Die beiden Anschlagsflächen sind so orientiert, dass eine weiterführende Drehung aus der Rastlage hinaus gegen die Richtung in die Einsetzlage zwischen dem Verbindungselement und dem Profil verunmöglicht wird.

Vorzugsweise wird die verbindungselementseitige Anschlagsfläche durch einen Kamm gebildet, welcher an den Endseiten der verbindungselementseitige Rasterhebungen und quer verbindungselementseitigen Rasterhebungen verlaufend angeordnet ist. Die profilseitige Anschlagsfläche wird durch Seitenkanten der profilseitigen Rasterhebungen gebildet.

Vorzugsweise weist die Gewindeöffnung ein Innengewinde auf. Das Innengewinde ist bevorzugt ein rechtsgängiges Gewinde. Die genannten Anschlagsflächen sind derart angeordnet, dass bei einem Einschraubvorgang einer Schraube in das Innengewinde die Anschlagsflächen gegeneinander gedrückt werden.

Somit wird sichergestellt, dass auch Drehmomente, welche über die Schraube auf das Verbindungselement wirken, gut kompensiert werden können.

Vorzugsweise weist das Verbindungselement zwischen zwei benachbarten Reihen von verbindungselementseitigen Rasterhebungen eine Nute auf. Beim Einsetzen des Verbindungselements in den Profilinnenraum liegen die profilseitigen Rasterhebungen in der Nute, derart, dass das Verbindungselement in Richtung der Profilachse frei in den Profilinnenraum einsetzbar ist.

Die Nute weist vorzugsweise eine ebene Grundfläche auf.

In einer zweiten Ausführungsform weist das Verbindungelement mindestens zwei Klemmbacken auf. Die verbindungselementseitigen Rasterhebungen sind an den mindestens zwei Klemmbacken angeordnet. Das Verbindungselement weist weiterhin ein Aktuatorelement auf, welches von einer Ausgangslage in eine Klemmlage verschiebbar ist. Bei der Bewegung des Aktuatorelements von der Ausgangslage in die Klemmlage werden die Klemmbacken quer zur Profilachse zur jeweiligen Seitenwand hin bewegt, derart, dass die verbindungselementseitigen Rasterhebungen mit den profilseitigen Rasterhebungen einen Eingriff eingehen und so das Verbindungselement die Rastlage einnimmt.

Das Aktuatorelement weist weiterhin den Funktionsabschnitt auf.

Vorzugsweise werden die Klemmbacken mit einem elastischen Element, welches sich aussenseitig um die Klemmbacken herumerstreckt, zum Aktuatorelement gehalten. Das elastische Element liegt in einer Rille an der Klemmbacke.

Vorzugsweise weist das Aktuatorelement mindestens eine Aktuatorfläche auf. Die Aktuatorfläche liegt in einem Winkel winklig geneigt zur Profilachse. Die Klemmbacke weist eine Wirkfläche auf, auf welcher die Aktuatorfläche auf die Klemmbacke einwirkt. Bei einer Relativverschiebung zwischen dem Aktuatorelement und der Klemmbacke ist die Klemmbacke aufgrund der winkligen Neigung der Aktuatorfläche quer zur Profilachse nach aussen zur Seitenwand hin bewegbar.

Vorzugsweise liegt die Wirkfläche in einem Winkel winklig geneigt zur Profilachse. Der Winkel der Wirkfläche ist vorzugsweise gleich zum Winkel zwischen der Profilachse und der Aktuatorfläche.

Vorzugsweise sind die mindestens eine Aktuatorfläche und die Wirkflächen konisch ausgebildet. Die Aktuatorfläche ist vorzugsweise ein Aussenkonus und die Wirkfläche ist vorzugsweise ein Innenkonus.

Vorzugsweise sind zwei der genannten Aktuatorflächen in Richtung der Profilachse gesehen beabstandet zueinander angeordnet. Vorzugsweise sind zwei der genannten Wirkflächen in Richtung der Profilachse gesehen beabstandet zueinander angeordnet.

Vorzugsweise weist das Aktuatorelement ein Innengewinde auf. Das Innengewinde kann das Funktionselement bereitstellen. Die Anordnung umfasst weiterhin eine Lagerplatte mit einer Durchgangsöffnung und eine sich durch die Durchgangsöffnung hindurch erstreckende Schraube auf. Die Lagerplatte liegt an einer der Stirnflächen des Profils auf und bei Drehung der Schraube wird das Aktuatorelement gegen die Lagerplatte gezogen.

Vorzugsweise schlagen die Klemmbacken an einer dem Profilinnenraum zugewandten Fläche der Lagerplatte an.

Vorzugsweise liegt das Verbindungselement in seiner Rastlage vollständig im Profilinnenraum.

Vorzugsweise sind die profilseitigen Rasterhebungen an zwei bezüglich des Profilinnenraums gegenüberliegenden Seitenwänden angeordnet.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer erfindungsgemässen Anordnung nach einer ersten Ausführungsform der vorliegenden Erfindung;
- Fig. 2: eine perspektivische Detailansicht eines Verbindungselements nach der Anordnung gemäss Figur 1;
- Fig. 3: eine Frontansicht der Anordnung nach den Figuren 1 und 2, wobei das Verbindungselement in einer Einsetzlage ist;
- Fig. 4: eine Frontansicht der Anordnung nach den Figuren 1 und 2, wobei das Verbindungselement in einer Rastlage ist;
- Fig. 5: eine Schnittansicht der Anordnung nach den Figuren 1 bis 4, wobei das Verbindungselement in einer Einsetzlage ist;
- Fig. 6: eine Schnittansicht der Anordnung nach den Figuren 1 und 4, wobei das Verbindungselement in einer Rastlage ist;
- Fig. 7: eine perspektivische Explosionsansicht einer Weiterbildung der Anordnung nach den Figuren 1 bis 6;
- Fig. 8: eine perspektivische Ansicht einer erfindungsgemässen Anordnung nach einer zweiten Ausführungsform der vorliegenden Erfindung;
- Fig. 9: eine perspektivische Detailansicht eines Verbindungselements nach der Anordnung gemäss Figur 8;
- Fig. 10: eine Schnittansicht der Anordnung nach den Figuren 8 bis 9, wobei das Verbindungselement in einer Einsetzlage ist;
- Fig. 11: eine Schnittansicht der Anordnung nach den Figuren 8 bis 9, wobei das Verbindungselement in einer Rastlage ist;
- Fig. 12: eine perspektivische Ansicht einer Weiterbildung der Anordnung nach den Figuren 8 bis 11; und
- Fig. 13: eine perspektivische Explosionsansicht einer Weiterbildung der Anordnung nach den Figuren 8 bis 11.

### BESCHREIBUNG BEVORZUGTER AUSFÜHRUNGSFORMEN

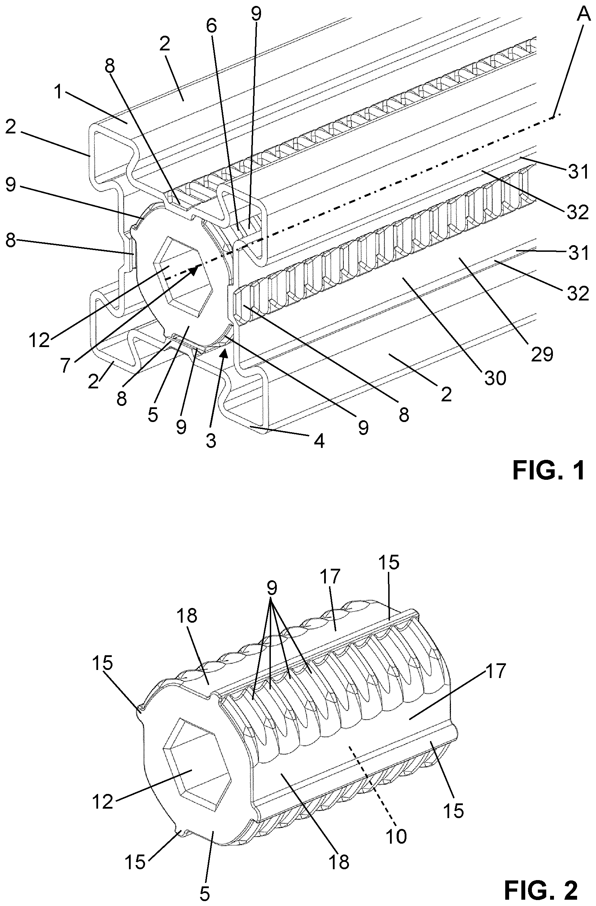

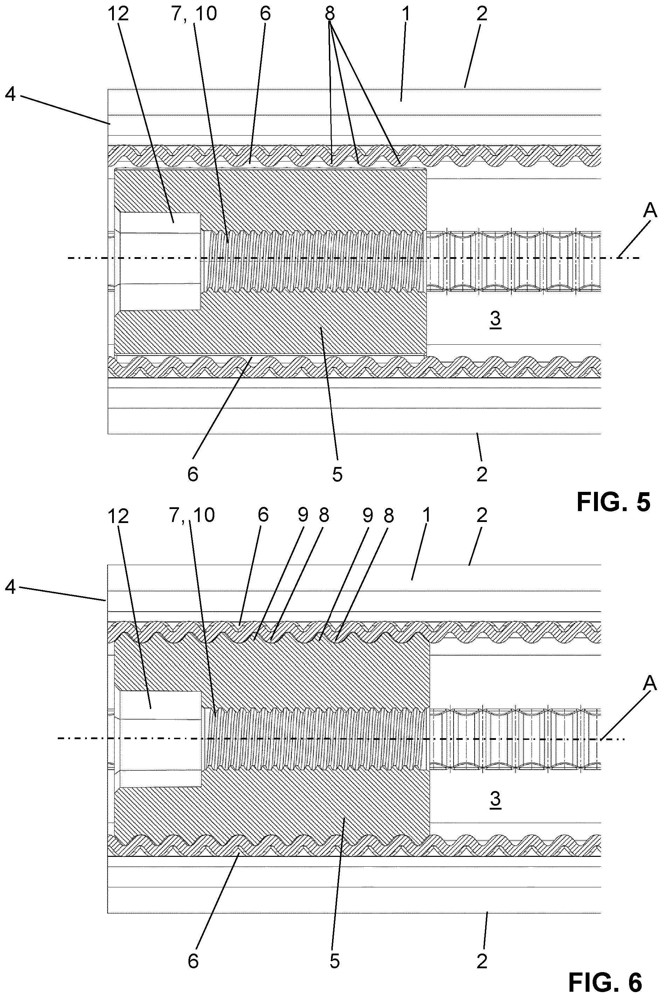

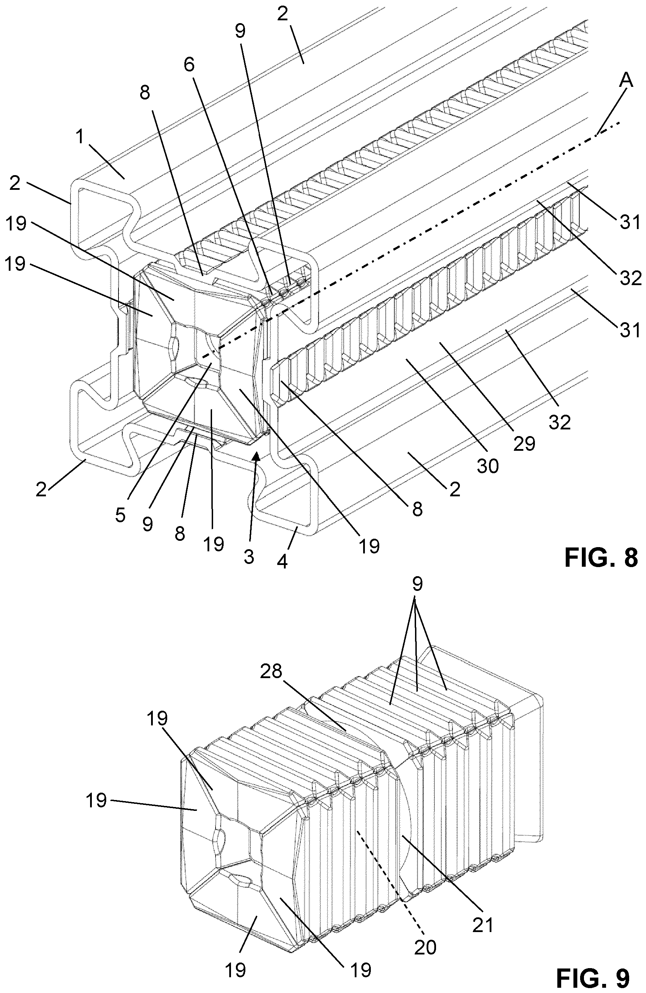

In den Figuren 1 bis 7 wird eine erste Ausführungsform der Anordnung gemäss der vorliegenden Erfindung gezeigt und in den Figuren 8 bis 13 wird eine zweite Ausführungsform der Anordnung gemäss der vorliegenden Erfindung gezeigt. Gleiche Teile sind dabei mit gleichen Bezugszeichen versehen.

Die in den Figuren 1 bis 13 dargestellten Anordnungen dienen Bereitstellung einer Verbindung zwischen einem Profil 1 und einem weiteren Element E.

Die Anordnung umfasst ein sich entlang einer Profilachse A ersteckendes Profil 1 und mindestens ein mit dem Profil 1 verbindbares Verbindungselement 5. Das Verbindungselement 5 dient der Verbindung zwischen dem Profil 1 und dem weiteren Element E.

Das Profil 1 weist eine Seitenwand 2 auf, welche einen Profilinnenraum 3 seitlich begrenzt. Endseitig ist das Profil 2 mit Stirnflächen 4 begrenzt. Die Stirnflächen 4 stehen vorzugsweise rechtwinklig zur Profilachse A. In der gezeigten Ausführungsform weist das Profil 1 vier Seitenwände 2 auf. Jede der Seitenwand 2 weist eine Nute 29 auf. Die Nuten 29 erstrecken sich entlang der Profilachse A. Die Nute 29 ist durch jeweils einen Grundschenkel 30 und zwei vom Grundschenkel 30 abstehende Seitenschenkel 31 begrenzt. Jeder der Seitenschenkel 31 weist eine in die jeweilige Nute einragende Auskragung 32 auf. Andere Formen des Profils 2 sind ebenfalls denkbar.

Mindestens eine der genannten Seitenwände 2 weist eine Vielzahl von beabstandet zueinander liegenden profilseitigen Rasterhebungen 8 auf. Die profilseitigen Rasterhebungen 8 sind quer zur Profilachse A orientiert und erstrecken sich in den Profilinnenraum 3 hinein.

Das Verbindungselement 5 weist einen Verbindungsabschnitt 6 und einen Funktionsabschnitt 7 auf. Der Funktionsabschnitt 7 ist für die Befestigung des weiteren Elements E vorgesehen. Der Verbindungsabschnitt 6 dient der Befestigung des Funktionselements 5 am Profil 1.

In beiden Ausführungsformen weist das Verbindungselement 5 eine Vielzahl von verbindungselementseitigen Rasterhebungen 9 auf. Die profilseitigen Rasterhebungen 8 und verbindungselementseitigen Rasterhebungen 9 sind dabei so ausgebildet, dass die Rasterhebungen 8, 9 einen Rasteingriff eingehen können. Der Rasteingriff zwischen den Rasterhebungen 8, 9 ist dabei derart, dass das Verbindungselement 5 mindestens bezüglich einer Bewegung in Richtung der Profilachse A am Profil 1 festgesetzt ist.

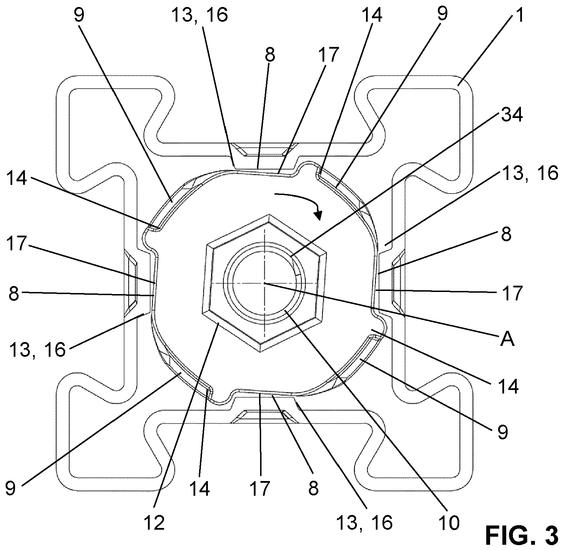

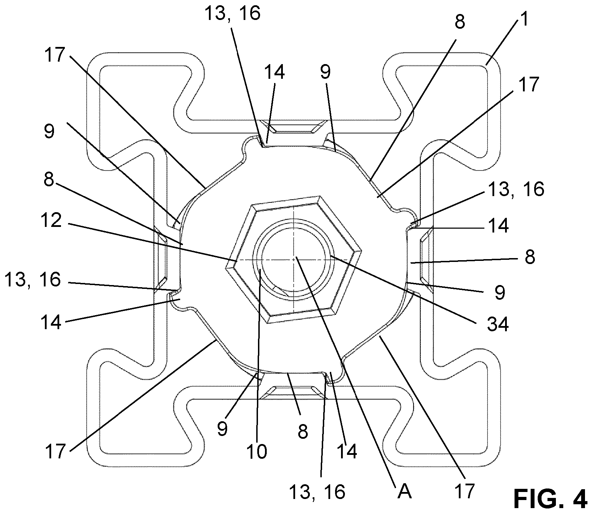

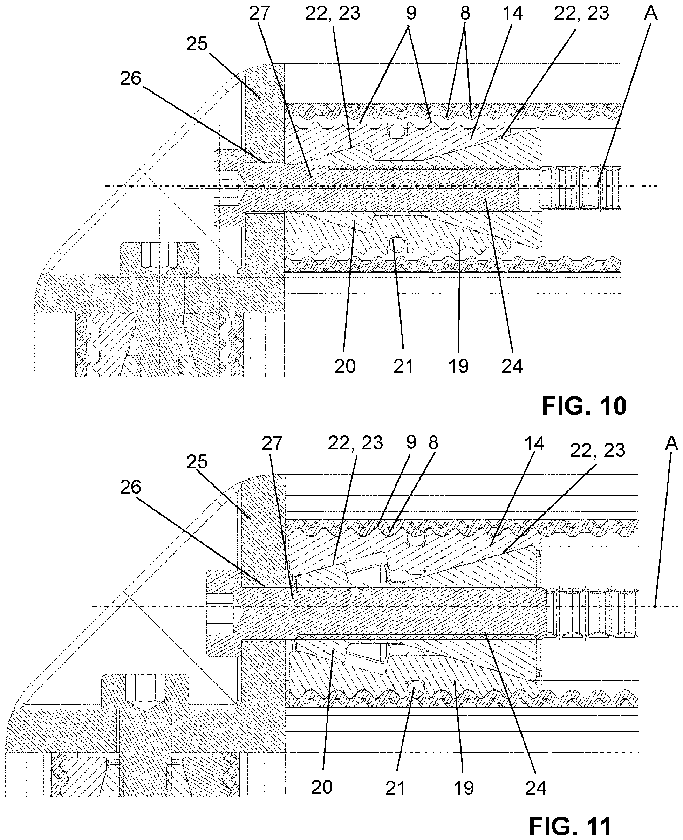

Von den Figuren 3 und 4 sowie 10 und 11 ist ersichtlich, dass das Verbindungselement 5 in den Profilinnenraum 3 einsetzbar ist. Die Figuren 3 und 10 zeigen das Verbindungselement 5 im eingesetzten Zustand. In diesem Zustand, das heisst in einer Einsetzlage, sind die Rasterhebungen 8, 9 noch nicht im Eingriff miteinander. Ausgehend von der Einsetzlage ist das Verbindungselement 5 in eine Rastlage bewegbar. Bei der Bewegung von der Einsetzlage in die Rastlage sind die verbindungselementseitigen Rasterhebungen 9 in einen Eingriff mit den profilseitigen Rasterhebungen 8 bringbar. Der Eingriff ist dabei derart, dass das Verbindungselement 5 im Profilinnenraum 3 bezüglich einer Bewegung in Richtung der Profilachse A festgelegt ist. In den Figuren 4 und 11 wird die Rastlage gezeigt.

Die Rasterhebungen 8, 9 sind derart im Eingriff miteinander, dass immer eine Rasterhebung 8 im Zwischenraum zwischen zwei benachbarten Rasterhebungen 9 liegt und dass immer eine Rasterhebung 9 im Zwischenraum zwischen zwei benachbarten Rasterhebungen 9 liegt.

In der ersten Ausführungsform wird das Verbindungselement 5 verschwenkt. In der zweiten Ausführungsform werden Teile vom Verbindungselement 5 zu den Seitenwänden hin bewegt.

Anhand der Figuren 1 bis 6 wird nun die erste Ausführungsform der vorliegenden Erfindung genauer beschrieben.

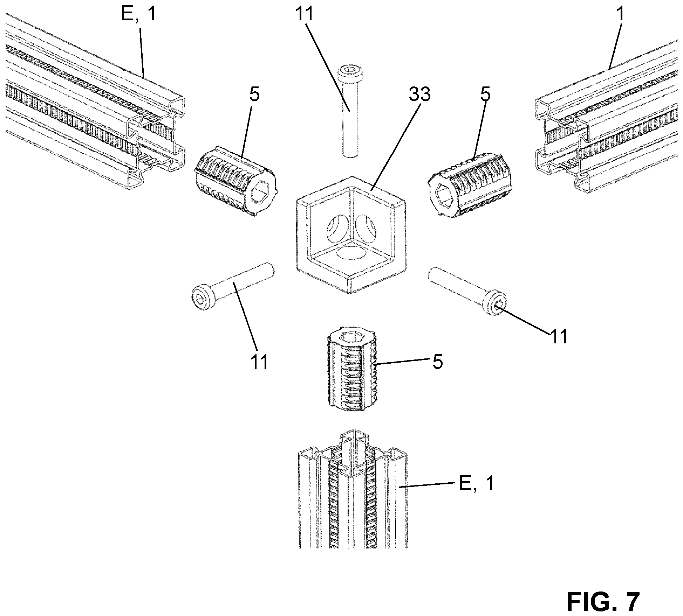

Das Verbindungselement 5 weist als Funktionsabschnitt 7 eine Gewindeöffnung 10 zur Aufnahme einer Befestigungsschraube 11 auf. Die Befestigungsschraube 11 wird in der Figur 7 gezeigt. Der Gewindeöffnung 10 ist eine Antriebsöffnung 12 vorgelagert. Das Verbindungselement 5 ist, wie oben erwähnt, von der Einsetzlage in die Rastlage verschwenkbar. Über die Antriebsöffnung 12 kann das Verbindungselement 5 entsprechend verschwenkt werden. Hierfür kann ein Installateur über die Antriebsöffnung 12 das Verbindungselement 5 mit einer Schwenkbewegung beaufschlagen. Typischerweise wird dafür ein Werkzeug verwendet. Beispielsweise kann die Antriebsöffnung 12, wie in Figuren dargestellt, als Innensechskantöffnung ausgebildet sein, wobei das Werkzeug dann eine entsprechende Ausbildung aufweist. Die Schwenkbewegung wird in der Figur 3 mit einem Pfeil symbolisiert. Bei der Schwenkbewegung wird das Verbindungselement 5 um die Profilachse A verschwenkt.

Von den Figuren 3 und 4 wird der Verschwenkwinkel des Verbindungselements 5 ersichtlich. Das Verbindungselement 5 wird ausgehend von der Einsetzlage in die Rastlage um die Profilachse A um einen Verschwenkwinkel verschwenkt. Der Verschwenkwinkel liegt vorzugsweise im Bereich von 45° bis 90°, insbesondere im Bereich von 45° bis 80°.

In der gezeigten ersten Ausführungsform weist die Seitenwand 2 im Profilinnenraum 3 mindestens eine profilseitige Anschlagsfläche 13 auf. Das Verbindungselement 5 eine weist verbindungselementseitige Anschlagsfläche 14 auf. In der Einsetzlage, so wie von der Figur 3 ersichtlich, liegen die beiden Anschlagsflächen 13, 14 beabstandet zueinander. In der Rastlage, so wie von der Figur 4 ersichtlich, schlagen die beiden Anschlagsflächen 13, 14 aneinander an.

Die verbindungselementseitige Anschlagsfläche 14 wird durch einen Kamm 15 gebildet, welcher an den Endseiten der verbindungselementseitige Rasterhebungen 9 und quer verbindungselementseitigen Rasterhebungen 9 verlaufend angeordnet ist. Der Kamm 15 ist von der Figur 2 ersichtlich. Die profilseitige Anschlagsfläche 13 wird durch Seitenkanten 16 der profilseitigen Rasterhebungen 8 gebildet.

Die Gewindeöffnung 10 weist ein Innengewinde 34 auf, welches bevorzugt ein rechtsgängiges Gewinde ist. Die genannten Anschlagsflächen 13, 14 sind derart angeordnet, dass bei einem Einschraubvorgang der Befestigungsschraube 11 in das Innengewinde 34 die Anschlagsflächen 13, 14 gegeneinander gedrückt werden. Insofern werden die beim Anziehen der Befestigungsschraube 11 entstehenden Kräfte über die Anschlagsflächen 13, 14 abgeleitet.

Von der Figur 2 ist weiterhin ersichtlich, dass das Verbindungselement 5 zwischen zwei benachbarten Reihen von verbindungselementseitigen Rasterhebungen 9 eine Nute 17 aufweist. Beim Einsetzen des Verbindungselements 5 in den Profilinnenraum 3 liegen die profilseitigen Rasterhebungen 8 in der Nute 17. Es wird auf die Figur 3 verwiesen. Dabei liegen die profilseitigen Rasterhebungen 8, derart, dass das Verbindungselement 5 in Richtung der Profilachse A frei in den Profilinnenraum 3 einsetzbar ist. Die Nute 17 weist hier eine ebene Grundfläche 18 auf.

In der Figur 7 wird eine Weiterbildung der ersten Ausführungsform genauer gezeigt. Hier sind als weitere Elemente E verschiedene Profile angeordnet, welche über ein Zwischenstück 33 und der Befestigungsschraube 11 mit dem Verbindungselement 5 und somit mit dem Profil 1 verbunden sind. Die anderen Profile sind gleich zum Profil 1 ausgebildet und weisen ebenfalls je ein Verbindungselement 5 auf.

Anhand der Figuren 8 bis 13 wird nun die zweite Ausführungsform der vorliegenden Erfindung genauer beschrieben.

Das Verbindungelement 5 der zweiten Ausführungsform weist mindestens zwei Klemmbacken 19 auf. In der gezeigten Ausführungsform sind vier Klemmbacken 19 angeordnet. Jede der Klemmbacken 19 wirkt jeweils vom Profilinnenraum 3 auf eine der Seitenwände 2 des Profils 1. Die verbindungselementseitigen Rasterhebungen 9 sind an den mindestens zwei Klemmbacken 19 angeordnet. Das Verbindungselement 5 weist weiterhin ein Aktuatorelement 20 auf, welches von einer Ausgangslage in eine Klemmlage verschiebbar ist. Das Aktuatorelement 20 stellt zudem den Funktionsabschnitt 7 bereit. Der Funktionsabschnitt 7 ist hier ein Innengewinde 24. Bei der Bewegung des Aktuatorelements 20 werden die Klemmbacken 19 von der Ausgangslage in die Klemmlage quer zur Profilachse A zur jeweiligen Seitenwand 2 hin bewegt. Die Bewegung ist dabei derart, dass die verbindungselementseitigen Rasterhebungen 9 mit den profilseitigen Rasterhebungen 8 einen Eingriff eingehen und so das Verbindungselement 5 die Rastlage einnimmt. In der Figur 10 wird das Verbindungselement 5 in der Einsetzlage gezeigt. Ausgehend von dieser Position werden die Klemmbacken 19 bei Betätigung des Aktuatorelements 20 nach aussen zu den Seitenwänden 2 hin bewegt. In der Figur 10 wird die Rastlage gezeigt, in welcher die Rasterhebungen 8, 9 miteinander im Eingriff sind.

In der gezeigten Ausführungsform werden die Klemmbacken 19 mit einem elastischen Element 21, welches sich aussenseitig um die Klemmbacken 19 herum erstreckt, zum Aktuatorelement 20 gehalten. Das elastische Element 21 liegt in einer Rille 28 an der Klemmbacke 19. Das elastische Element 21 kann beispielsweise ein O-Ring sein.

Vorzugsweise weist das Aktuatorelement 20 mindestens eine Aktuatorfläche 22 auf, die in einem Winkel winklig geneigt zur Profilachse A liegt. Die Klemmbacke 19 weist eine Wirkfläche 23 auf, auf welcher die Aktuatorfläche 22 auf die Klemmbacke 19 einwirkt. Bei einer Relativverschiebung zwischen dem Aktuatorelement 20 und der Klemmbacke 19 ist die Klemmbacke 19 aufgrund der winkligen Neigung der Aktuatorfläche 22 quer zur Profilachse nach aussen zur Seitenwand 2 hin bewegbar. In der gezeigten Ausführungsform ist die Wirkfläche 23 ebenfalls in einem Winkel winklig geneigt zur Profilachse A. Der Winkel der Wirkfläche ist vorzugsweise gleich zum Winkel zwischen der Profilachse A und der Aktuatorfläche 22 ist. Vorzugsweise sind die mindestens eine Aktuatorfläche 22 und die mindestens eine Wirkfläche 23 konisch ausgebildet. Die Aktuatorfläche 22 ist vorzugsweise ein Aussenkonus und die Wirkfläche 23 ist vorzugsweise ein Innenkonus.

In der gezeigten Ausführungsform sind zwei der genannten Aktuatorflächen 22 in Richtung der Profilachse A gesehen beabstandet zueinander angeordnet. Ferner sind zwei der genannten Wirkflächen 23 in Richtung der Profilachse A gesehen beabstandet zueinander angeordnet.

Wie erwähnt, weist das Aktuatorelement 20 ein Innengewinde 24 auf. Die Anordnung umfasst weiterhin eine Lagerplatte 25 mit einer Durchgangsöffnung 26 und eine sich durch die Durchgangsöffnung 26 hindurch erstreckende Schraube 27. Die Lagerplatte 25 liegt an einer der Stirnflächen 4 des Profils 1 auf. Bei einer Drehung der Schraube 27 wird das Aktuatorelement 20 gegen die Lagerplatte gezogen. Die Klemmbacken 19 schlagen an einer dem Profilinnenraum 3 zugewandten Fläche der Lagerplatte 25 an.

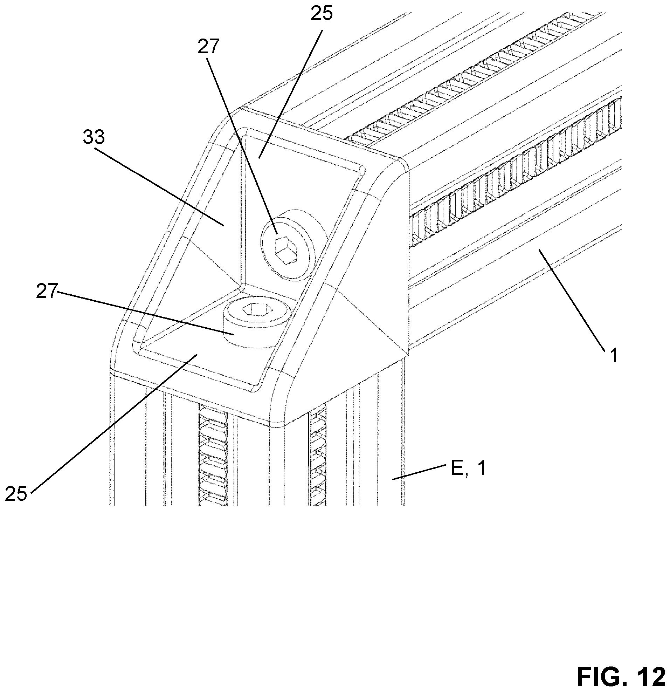

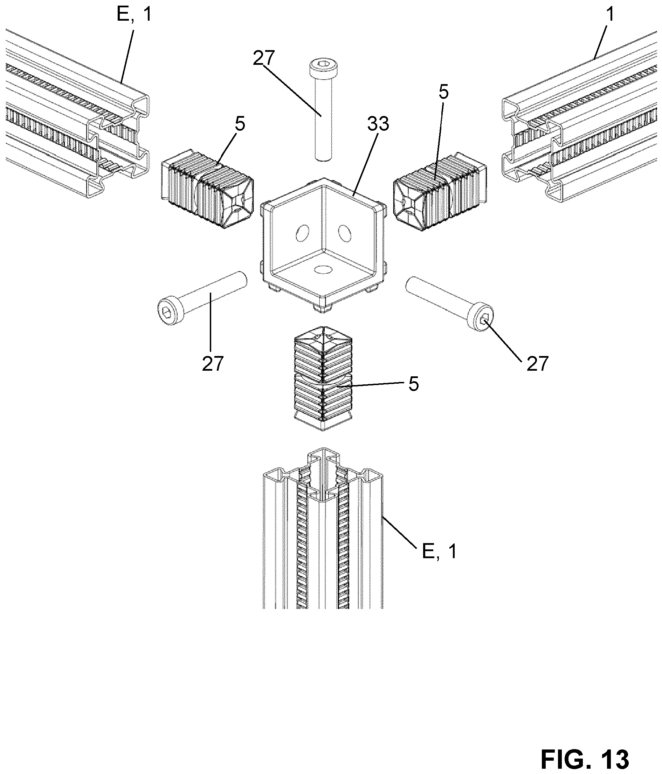

In den Figuren 12 und 13 werden Weiterbildung der zweiten Ausführungsform genauer gezeigt. Hier sind als weitere Elemente E verschiedene Profile angeordnet, welche über ein Zwischenstück 33 und der Befestigungsschraube 27 mit dem Verbindungselement 5 und somit mit dem Profil 1 verbunden sind. Die anderen Profile sind gleich zum Profil 1 ausgebildet und weisen ebenfalls je ein Verbindungselement 5 auf.

### BEZUGSZEICHENLISTE

- 1: Profil
- 2: Seitenwand
- 3: Profilinnenraum
- 4: Stirnfläche
- 5: Verbindungselement
- 6: Verbindungsabschnitt
- 7: Funktionsabschnitt
- 8: profilseitige Rasterhebungen
- 9: verbindungselementseitige Rasterhebungen
- 10: Gewindeöffnung
- 11: Befestigungsschraube
- 12: Antriebsöffnung
- 13: profilseitige Anschlagsfläche
- 14: verbindungselementseitige Anschlagsfläche
- 15: Kamm
- 16: Seitenkanten
- 17: Nute
- 18: Grundfläche
- 19: Klemmbacke
- 20: Aktuatorelement
- 21: elastisches Element
- 22: Aktuatorfläche
- 23: Wirkfläche
- 24: Innengewinde von 20
- 25: Lagerplatte
- 26: Durchgangsöffnung
- 27: Schraube
- 28: Rille
- 29: Nute an 1
- 30: Grundschenkel
- 31: Seitenschenkel
- 32: Auskragung
- 33: Zwischenstück
- 34: Innengewinde von 10
- A: Profilachse
- E: weiteres Element

## Patentansprüche

1. Anordnung zur Bereitstellung einer Verbindung zwischen einem Profil (1) und einem weiteren Element (E), wobei die Anordnung
ein sich entlang einer Profilachse (A) ersteckendes Profil (1) mit einer Seitenwand (2), welche einen Profilinnenraum (3) seitlich begrenzt, und mit Stirnflächen (4), welche das Profil (1) jeweils endseitig begrenzen, und
mindestens ein mit dem Profil (1) verbindbares Verbindungselement (5) mit einem Verbindungsabschnitt (6) und mindestens einem Funktionsabschnitt (7), umfasst,
wobei mindestens eine der genannten Seitenwände (2) eine Vielzahl von beabstandet zueinander liegenden profilseitigen Rasterhebungen (8) aufweist, welche quer zur Profilachse (A) orientiert sind und sich in den Profilinnenraum (3) hineinerstrecken,
wobei das Verbindungselement (5) eine Vielzahl von verbindungselementseitigen Rasterhebungen (9) aufweist, und
wobei das Verbindungselement (5) in den Profilinnenraum (3) einsetzbar ist und im eingesetzten Zustand von einer Einsetzlage in eine Rastlage bewegbar ist, derart, dass die verbindungselementseitigen Rasterhebungen (9) in einen Eingriff mit den profilseitigen Rasterhebungen (8) bringbar sind, wobei der Eingriff derart ist, dass das Verbindungselement (5) im Profilinnenraum (3) bezüglich einer Bewegung in Richtung der Profilachse (A) festgelegt ist.

2. Anordnung nach einem der vorhergehenden Ansprüche, **dadurch gekennzeichnet, dass** das Verbindungselement (5) als Funktionsabschnitt (7) eine Gewindeöffnung (10) zur Aufnahme einer Befestigungsschraube (11) aufweist, wobei der Gewindeöffnung (10) eine Antriebsöffnung (12) vorgelagert ist, mit welcher das Verbindungselement (5) von der Einsetzlage in die Rastlage verschwenkbar ist.

3. Anordnung nach einem der vorhergehenden Ansprüche, **dadurch gekennzeichnet, dass** das Verbindungselement (5) ausgehend von der Einsetzlage in die Rastlage um die Profilachse (A) um einen Verschwenkwinkel verschwenkt wird, wobei der Verschwenkwinkel vorzugsweise im Bereich von 45° bis 90°, insbesondere im Bereich von 45° bis 80°, ist.

4. Anordnung nach einem der vorhergehenden Ansprüche, **dadurch gekennzeichnet, dass** im Profilinnenraum (3) die Seitenwand (2) mindestens eine profilseitige Anschlagsfläche (13) aufweist und dass das Verbindungselement (5) eine verbindungselementseitige Anschlagsfläche (14) aufweist, wobei die beiden Anschlagsflächen (13, 14) aneinander anschlagen, wenn das Verbindungselement (5) in der Rastlage ist.

5. Anordnung nach Anspruch 4, **dadurch gekennzeichnet, dass** die verbindungselementseitige Anschlagsfläche (14) durch einen Kamm (15) gebildet wird, welcher an den Endseiten der verbindungselementseitige Rasterhebungen (9) und quer verbindungselementseitigen Rasterhebungen (9) verlaufend angeordnet ist; und dass die profilseitige Anschlagsfläche (13) durch Seitenkanten (16) der profilseitigen Rasterhebungen (8) gebildet wird.

6. Anordnung nach einem der vorhergehenden Ansprüche 2 bis 5, **dadurch gekennzeichnet, dass** die Gewindeöffnung (10) ein Innengewinde (34) aufweist, welches ein bevorzugt rechtsgängiges Gewinde ist, und dass die genannten Anschlagsflächen (13, 14) derart angeordnet sind, dass bei einem Einschraubvorgang einer Schraube in das Innengewinde (34) die Anschlagsflächen (13, 14) gegeneinander gedrückt werden.

7. Anordnung nach einem der vorhergehenden Ansprüche, **dadurch gekennzeichnet, dass** das Verbindungselement (5) zwischen zwei benachbarten Reihen von verbindungselementseitigen Rasterhebungen (9) eine Nute (17) aufweist, wobei beim Einsetzen des Verbindungselements (5) in den Profilinnenraum (3) die profilseitigen Rasterhebungen (8) in der Nute liegen, derart, dass das Verbindungselement (5) in Richtung der Profilachse (A) frei in den Profilinnenraum (3) einsetzbar ist.

8. Anordnung nach Anspruch 7, **dadurch gekennzeichnet, dass** die Nute (17) eine ebene Grundfläche (18) aufweist.

9. Anordnung nach Anspruch 1, **dadurch gekennzeichnet, dass** das Verbindungelement (5) mindestens zwei Klemmbacken (19) aufweist, wobei die verbindungselementseitigen Rasterhebungen (9) an den mindestens zwei Klemmbacken (19) angeordnet sind, und dass das Verbindungselement (5) weiterhin ein Aktuatorelement (20) aufweist, welches von einer Ausgangslage in eine Klemmlage verschiebbar ist, wobei bei der Bewegung des Aktuatorelements von der Ausgangslage in die Klemmlage die Klemmbacken (19) quer zur Profilachse (A) zur jeweiligen Seitenwand (2) hin bewegt werden, derart, dass die verbindungselementseitigen Rasterhebungen (9) mit den profilseitigen Rasterhebungen (8) einen Eingriff eingehen und so das Verbindungselement (5) die Rastlage einnimmt.

10. Anordnung nach Anspruch 9, **dadurch gekennzeichnet, dass** die Klemmbacken (19) mit einem elastischen Element (21), welches sich aussenseitig um die Klemmbacken (19) herumerstreckt, zum Aktuatorelement (20) gehalten werden, wobei das elastische Element (21) in einer Rille (28) an der Klemmbacke (19) liegt.

11. Anordnung nach einem der Ansprüche 9 bis 10, **dadurch gekennzeichnet, dass** das Aktuatorelement (20) mindestens eine Aktuatorfläche (22) aufweist, die in einem Winkel winklig geneigt zur Profilachse (A) liegt und dass die Klemmbacke (19) eine Wirkfläche (23) aufweist, auf welcher die Aktuatorfläche (22) auf die Klemmbacke (19) einwirkt, wobei bei einer Relativverschiebung zwischen dem Aktuatorelement (20) und der Klemmbacke (19) die Klemmbacke (19) aufgrund der winkligen Neigung der Aktuatorfläche (22) quer zur Profilachse nach aussen zur Seitenwand (2) hin bewegbar ist.

12. Anordnung nach Anspruch 11, **dadurch gekennzeichnet, dass** die Wirkfläche (23) in einem Winkel winklig geneigt zur Profilachse (A) liegt; wobei der Winkel der Wirkfläche vorzugsweise gleich zum Winkel zwischen der Profilachse (A) und der Aktuatorfläche (22) ist.

13. Anordnung nach Anspruch 11 oder 12, **dadurch gekennzeichnet, dass** zwei der genannten Aktuatorflächen (22) in Richtung der Profilachse (A) gesehen beabstandet zueinander angeordnet sind; und/oder dass zwei der genannten Wirkflächen (23) in Richtung der Profilachse (A) gesehen beabstandet zueinander angeordnet sind.

14. Anordnung nach einem der Ansprüche 9 bis 13, **dadurch gekennzeichnet, dass** das Aktuatorelement (20) ein Innengewinde (24) aufweist, dass die Anordnung weiterhin eine Lagerplatte (25) mit einer Durchgangsöffnung (26) und eine sich durch die Durchgangsöffnung (26) hindurch erstreckende Schraube (27) aufweist, wobei die Lagerplatte (25) an einer der Stirnflächen (4) des Profils (1) aufliegt und wobei bei Drehung der Schraube (27) das Aktuatorelement (20) gegen die Lagerplatte gezogen wird.

15. Anordnung nach Anspruch 14, **dadurch gekennzeichnet, dass** die Klemmbacken (19) an einer dem Profilinnenraum (3) zugewandten Fläche der Lagerplatte (25) anschlagen.

16. Anordnung nach einem der vorhergehenden Ansprüche, **dadurch gekennzeichnet,**
**dass** das Verbindungselement in seiner Rastlage vollständig im Profilinnenraum liegt; und/oder
**dass** die profilseitigen Rasterhebungen (8) an zwei bezüglich des Profilinnenraums (3) gegenüberliegenden Seitenwänden (2) angeordnet sind.
